**Europäisches Patentamt**

**European Patent Office**

**Office européen des brevets**

(19)

(11) Publication number: **0 085 978**

**B1**

(12) **EUROPEAN PATENT SPECIFICATION**

(45) Date of publication of patent specification: **28.10.87**

(51) Int. Cl.⁴: **G 01 B 11/06**

(21) Application number: **83101142.4**

(22) Date of filing: **07.02.83**

(54) **Method of and apparatus for measuring the thickness and the refractive index of transparent materials.**

(30) Priority: **10.02.82 IT 6714982**

(43) Date of publication of application:
**17.08.83 Bulletin 83/33**

(45) Publication of the grant of the patent:
**28.10.87 Bulletin 87/44**

(84) Designated Contracting States:
**DE FR GB NL**

(56) References cited:
**EP-A-0 011 723**
**DE-A-2 448 294**
**US-A-3 737 237**
**US-A-3 744 916**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Coppa, Gianni**
**V.le alla Vittoria, 40**
**Asti (IT)**
Inventor: **Grego, Giorgio**
**C.so Grosseto, 190**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

# Description

The present invention relates to a method of and an apparatus for measuring the refractive index and the thickness of transparent materials, more particularly, but not exclusively, the invention concerns a method of measuring such characteristics in a dielectric material obtained by growth, such as an optical-fibre preform obtained by chemical vapour deposition (CVD).

Various methods of and apparatuses for measuring the refractive index of transparent-material samples or of already produced fibres are known.

As to the measurements on individual samples, some apparatuses (spectrometers) are based on the measurement of the minimum deviation angle of a prism, others (Pulfrich and Abbe refractometers) on the measurement of the critical angle. These already known devices do not allow thickness measurements and, besides, present the disadvantage of requiring a particular working (e.g. a prism cut) of the sample; therefore they cannot be used when the sample is not prism-shaped and cannot be worked so as to assume that shape, as usually occurs for a body being produced.

For the same reason the already known devices do not allow an on-line control of the thickness and of the refractive index during the sample fabrication. Said control allows timely interventions for modifying material concentration, growth speed etc; this is particularly important when the sample being produced is an optical-fibre preform, since an accurate preform manufacture is necessary to obtain a fibre with the wanted transmissive characteristics. This control cannot be effected even with the known methods of measuring the optical-fibre refractive index, which are usable only on already made fibres.

A method of determining the refractive index of a preform during fabrication is also known which method is based on measurements of the preform surface temperature. This method of course requires the preform surface to be accessible by the measuring devices, and hence it is not applicable when the preform itself is obtained by deposition of materials on the internal surface of a supporting tube. Besides it does not allow thickness measurements and hence the control on the fabrication process is only partial.

A method and an apparatus for measuring the thickness and the refractive index of a sample is known from DE—A—2448294. According to this method, the intensities of monochromatic rays reflected at different angles by the sample are measured. The object of the invention is to provide a method and an apparatus allowing measurements of the thickness and the refractive index of a sample without requiring a particular working of the same, which is only to present sensibly plane and parallel faces or to be assimilable to a body with plane or parallel faces; moreover the method and apparatus must allow measurements both on already-made samples or on samples being fabricated, for instance by deposition of successive layers on a support.

According to the present invention, the method of measuring the thickness and the refractive index of transparent materials comprises the steps of: generating two light radiations at slightly different frequencies; generating a first electrical signal at a frequency-equal to the difference between the frequencies of the two radiations, said signal representing the beat between said radiations which have followed a path outside the material; separating the two radiations so as to generate a first and second monochromatic beam, generating a second and a third electrical signal at a frequency equal to the difference between said two frequencies, said second and third signals representing the beats between the radiations of the first monochromatic beam, which are made to follow a paths outside the material, and of the second monochromatic beam, which are made to follow two different paths inside the material; measuring the phase differences, due to optical-path differences, between the second or third beat signal, respectively, and the first beat signal; obtaining the values of the thickness and refractive index of the material from said phase differences.

The apparatus apt to realize the method comprises: a source of a light beam comprising two radiations at slightly different frequencies; a first photodiode generating a first electrical signal at a frequency equal to the difference between the frequencies of the two radiations; a beam splitter arranged to take off a fraction of the beam emitted from the source and send it to the first photodiode along a path which does not cross the material; means designed to split the residual beam fraction into the two monochromatic radiations; means apt to generate a second and third electrical signals at a frequency equal to the difference between the frequencies of the two radiations; an optical system designed to send to the means generating the second and third electrical signals one of the two radiations along a path which does not cross the material and the other along two different paths through the material; a phase comparison system which receives said electrical signals and generates signals which represent the phase difference between the second or third signals, respectively, and the first; a computing system apt to obtain the values of the thickness and of the refractive index from pairs of values of the phase difference.

For clarity purposes reference is made to the annexed drawings in which:

Fig. 1 schematically represents an apparatus according to the invention; and

Fig. 2 schematically represents an alternative embodiment of the same.

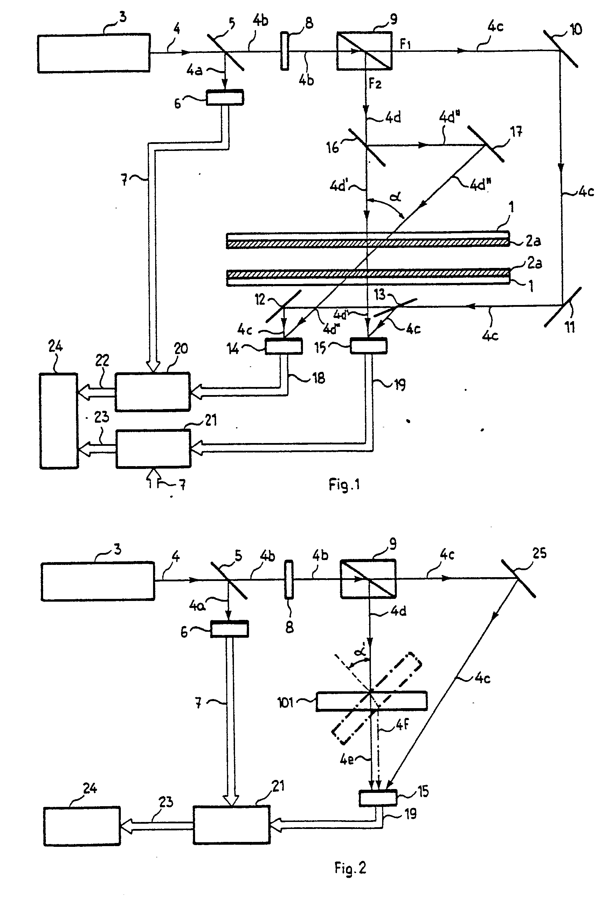

Fig. 1 represents an apparatus apt to measure the thickness and the refractive index of a sample consisting of an optical-fibre preform which is being produced by planar deposition of oxides

**0 085 978**

obtained by chemical synthesis of vapour reagents (chemical vapour deposition, CVD).

According to this method the reagents are deposited in subsequent layers inside or outside a silica-glass supporting tube and are oxidized during deposition in order to obtain silica doped with oxides of other elements depending on the required refractive index. The Figure concerns the deposition inside the supporting tube 1 and shows for the sake of simplicity a single deposited layer 2a. Single lines represent the light signal paths and double lines represent electrical connections.

A source of light rays 3, e.g. a Zeeman effect He—Ne laser, emits a beam of radiations 4 at two slightly different frequencies F1, F2, in particular with a difference of about 2 MHz. The radiations at the two frequencies are circularly polarized in opposite directions. It is essential for the frequency difference to be constant in time, for reasons which will become clearer hereinafter.

A portion 4a of this beam is extracted by means of a beam splitter 5 and is sent onto a first photodiode 6 along a path which does not cross the glass; a low-frequency electrical signal, representing the beat between the radiations at frequencies F1, F2, is present at output 7 of the photodiode.

A second portion 4b of beam 4 passes through splitter 5 and is sent to a quarter wave plate 8 converting the circularly-polarized radiations into two radiations polarized in orthogonal planes; these radiations are separated into a polarizer 9.

By a suitable optical system, schematized here by way of example by mirrors 10, 11, 12 and by splitter 13, one of the two radiations, e.g. radiation 4c at frequency F1, is sent to two photodiodes 14, 15, still along a path which does not cross preform 1, 2a.

The second radiation 4d, at frequency F2, is sent to the same photodiodes, passing through the preform and after being split, by an optical system schematized by splitter 16 and mirror 17, into two beams 4d′, 4d″ which follow two different paths. For instance, beam 4d′ will cross the preform perpendicularly to the axis thereof and beam 4d″ will cross the preform at an incidence angle $\alpha$. For the sake of simplicity the Figure does not represent the displacement undergone by beam 4d″ due to refraction.

Two further signals at frequency F=F1—F2 will be present on outputs 18, 19 of photodiodes 14, 15, each signal presenting at a given instant a certain phase difference with respect to the signal present on wire 7. The phase difference is dependent upon the optical path difference $\Delta 1$, which depends in turn on the refractive indices $n_1$, $n_2$ of glass and of air or other medium in which the preform is immersed, on the thickness S of the glass and on the incidence angle $\alpha$, according to the relation:

$$\Delta 1(\alpha) = 2S \left( \frac{n_1}{\sqrt{1 - \frac{n_0^2 \sin^2 \alpha}{n_1^2}}} - \frac{n_0}{\cos \alpha} \right) \qquad (1)$$

which for rays normal to the axis ($\alpha = 0$) becomes:

$$\Delta 1(0) = 2S(n_1 - n_0). \qquad (2)$$

Factor 2 takes into account the fact that the layer is traversed twice by rays 4d′, 4d″.

These formulae are valid in the case of a sample with plane and parallel faces, to which a silica layer deposited during the fabrication of an optical-fibre preform can be assimilated.

Wires 18, 19 are connected to the inputs of two phase comparators 20, 21 which receive as reference signal the signal present on wire 7. Outputs 22, 23 of comparators 20, 21 are connected to computing circuits 24 which, from the signals present on such outputs, compute the values of $n_1$ and S according to relations (1) and (2) and relation

$$\Delta \varphi = \frac{2\pi \Delta 1}{\lambda_0},$$

where $\lambda_0$ is the wavelength in vacuum.

To obtain a correct comparator operation signals present on wires 18 (or 19) and 7 must have exactly the same frequency. That is ensured by using as a source a single laser 3 which generates the two frequencies F1, F2 by Zeeman effect, using for instance a permanent magnet: since the difference between the two frequencies F1, F2 depends on magnetic-field intensity, which remains constant, and also the reference signal is obtained as a beat between the two radiations at frequencies F1, F2, it is clear that the compared beats satisfy the requirements.

The measurements by the described apparatus are effected as follows: before depositing the glass layers on tube 1, beams 4d′, 4d″ are made to pass through supporting tube 1, one perpendicularly and the other at an incidence angle $\alpha$, and a first measurement is effected of the phase differences existing on one side between signals present on wires 18 and 7, and on the other side between signals present on wires 19 and 7. Two values $\Delta \varphi_0(0)$, $\Delta \varphi_0(\alpha)$ are thus obtained and stored in the computing circuit 24 as starting values.

The operation is repeated after deposition of the first doped-silica layer 2a. The presence of this layer introduces for the two beams 4d′, 4d″ an optical path difference with respect to the preceding measurement; hence two new values $\Delta \varphi_1(0)$, $\Delta \varphi_1(\alpha)$ of the phase difference with respect to the reference signal are obtained. From the difference between these values and the starting ones, the computing circuit deduces the phase differences due to layer 2a and therefrom it computes refractive index $n_1(a)$ and thickness $S(a)$ of layer 2a.

The values are memorized as new starting values for the measurement of the refractive index and of the thickness of the next layer, which is effected as previously described.

The thickness and the refractive index could be measured at a single preform point. Yet, they are advantageously measured along the whole preform axis and, for a given axial position, along a whole circumference. The relative motion between preform and light source necessary to this aim can be provided by the preform production apparatus, which comprises at least means for rotating glass tube 1 during deposition. If such apparatus does not comprise means for translating tube 1, the optical systems and photodiodes 14, 15 can be mounted such as to obtain the relative translation between light beam and sample under test.

The described apparatus can be simplified in case of measurements on a sample of limited size. In this case, in fact, mounting the sample on a support which can be rotated by the required angle can be more avantageous than using an optical system to obtain ray 4d''.

Since in this case two subsequent measurements are effected by using the same incident ray, one of the two photodiodes 14, 15 and the relative phase comparator can be eliminated. The scheme of the apparatus is represented in Fig. 2. The sample is in this case a slab of transparent material 101, with parallel plane faces, mounted on a support, not represented, so as to be rotatable about a horizontal axis. Ray 4c at frequency F1 is sent onto photodiode 15 by means of an optical system schematized by mirror 25.

Such photodiode is mounted so as to receive both ray 4e, obtained when the ray 4d arrives on the sample at an incidence angle 0, and ray 4f, parallel to ray 4e, obtained when the incidence angle of ray 4d is different from 0. As in Fig. 1, photodiode 15 is connected to phase comparator 21 and to computing devices 24, which in this case must receive the information on angle $\alpha'$ by which the sample has been rotated to generate ray 4f. For this kind of sample the optical-path difference is given by the relation:

$$\Delta 1 = S(\sqrt{n^2 - \sin^2\alpha'} - \cos\alpha'),$$

obtainable like relation (1) on the ground of simple geometric optics considerations.

The method of measurement by using the apparatus of Fig. 2 is basically similar to that described with reference to Fig. 1; the phase shift introduced by the sample on the ray with incidence angle 0 is measured first and memorized, and a second measurement is effected after rotating the sample such that beam 4d presents an incidence angle $\alpha'$. The computing devices 24 deduce the values of the thickness and refractive index from the two phase-shift values.

So far it has been implied that the phase-shift introduced by the sample under test is less than $2\pi$, as phase comparators supply the value of the phase difference modulo $2\pi$. When measurements are effected on samples, such as plate 101, of thickness $\gg\lambda$ the phase-shift may be greater than $2\pi$. Going on as described so far, incorrect values would be obtained.

To overcome that, in an apparatus such as that of Fig. 2, three subsequent measurements can be effected on plate 101, the first for instance with a ray with incidence angle 0, and the other two by rotating the sample such as to obtain two incidence angles $\alpha_1$, $\alpha_2$.

The first measurement gives an initial value, corresponding to that obtained in the case of Fig. 1 by effecting the measurements on a support without layers, and the other two are used by the computing circuits to compute the values of thickness and refractive index. By a suitable choice of angles $\alpha_1$, $\alpha_2$, optical-path differences can be obtained which cause phase differences not greater than $2\pi$ with respect to the perpendicular ray.

It is clear that what described has been given only by way of non-limiting example and that variations and modifications will be possible without going out of the scope of the invention.

**Claims**

1. Method of measuring the thickness and the refractive index of transparent materials, comprising the steps of: generating two light radiations at slightly different frequencies; generating a first electrical signal at the frequency equal to the difference between the frequencies of the two radiations, said signal representing the beat between said radiations which have followed a path outside the material; separating the two radiations so as to generate a first and a second monochromatic beam; generating a second and a third electrical signal at the frequency equal to the difference between said two frequencies, said second and third signals representing the beats between the radiations of the first monochromatic beam, which are made to follow a path outside the material, and of the second monochromatic beam, which are made to follow two different paths inside the material; measuring the phase differences, due to optical-path differences, between the second or third beat signal, respectively, and the first beat signal; obtaining the values of the thickness and refractive index of the material from said phase differences.

2. Method according to claim 1, characterized in that said two light radiations are obtained by Zeeman effect.

3. Method according to claim 1 or 2, characterized in that the material under test is deposited in subsequent layers on a support, and in that said second and third beats are generated by making the second monochromatic beam pass first through the support alone, and then through the support with the deposited material, after deposition of each layer; the values of the phase differences between the second and third beats and the first beat are memorized after each measurement, and the values of the refractive-index and thickness are obtained from the difference between two subsequent measurements.

4. Method according to claim 3, characterized in that said layers are doped-silica layers deposited on a supporting tube for the production of optical-fibre preforms.

5. Method according to claim 4, characterized in that the measurements of thickness and refractive index are effected along the whole preform axis and, for each axial position, along the whole layer circumference.

6. Method according to any of claims 1 to 5, characterized in that the two different paths for the second beam are obtained by splitting with an optical system said beam into two partial beams, which are made to impinge onto the material at different incidence angles.

7. Method according to any of claims 1 to 5, characterized in that the two different paths for the second beam are obtained successively upon rotating the support and at least one of the respectively resulting electrical signals is memorized for the evaluation.

8. Method according to any of the previous claims, characterized in that for measuring thicknesses originating phase differences higher than $2\pi$ with respect to the first beat, a reference value is determined by making the second beam cross the material at a first incidence angle, and said second and third beats are generated by making the second beam cross the material at two different angles such that the phase difference they introduce with respect to the reference value is less than $2\pi$.

9. Apparatus for carrying out the method according to any of claims 1 to 8, comprising:
—a source (3) of a light beam (4) comprising two radiations at slightly different frequencies (F1, F2);
—a first photodiode (6) generating a first electrical signal with frequency equal to the difference between the frequencies of the two radiations;
—a beam splitter (5) for taking off a fraction of the beam (4) emitted from the source and sending it to said first photodiode (6) along a path (4a) which does not cross the material (1, 2a; 101);
—means (8, 9) apt to split the residual beam fraction into the two monochromatic radiations;
—means (14, 15) for generating a second and a third electrical signal which both have a frequency equal to the difference between the frequencies of the two radiations;
—an optical system (10, 11, 12, 13, 16, 17) apt to send the means generating the second and third electrical signal one of the two radiations along a path (4c) which does not cross the material and the other along two different paths (4d', 4d''; 4e, 4f) through the material;
—a phase comparison system (20, 21) which receives said electrical signals and generates signals representing the phase difference between the second or third signal, respectively, and the first;
—a computing system (24) apt to obtain the values of the thickness and of the refractive index from pairs of values of the phase difference.

10. Apparatus according to claim 9, characterized in that said source is a Zeeman effect laser.

11. Apparatus according to claim 9 or 10, characterized in that said optical system comprises means (16, 17) apt to split, the second radiation into two different beams which follow said different paths through the material, and in that the means apt to generate the second and third electrical signals comprise a second and third photodiode (14, 15) which receive each the second radiation according to one of the two different paths and are associated with a respective phase comparator (20, 21).

12. Apparatus according to claim 9 or 10, characterized in that the material (101) is mounted on a support which can be rotated to receive the second radiation at two different incidence angles, and in that the means to generate the second and third electrical signal comprise a single photodiode (15) which receives the second radiation along the two different paths at two different instants.

13. Apparatus according to any of the claims from 9 to 12, characterized in that means are provided to generate a relative movement between the material (1, 2a; 101) and the second radiation so as to effect measurements at different points of the surface of the material.

**Patentansprüche**

1. Verfahren zum Messen der Dicke und des Brechungsindex transparenter Materialien, mit den folgenden Verfahrensschritte:
man erzeugt zwei Lichtstrahlungen von geringfügig unterschiedlicher Frequenz;
man erzeugt ein erstes elektrisches Signal mit der Frequenz gleich der Differenz zwischen den Frequenzen der beiden Strahlungen, das die Schwebung zwischen diesen Strahlungen darstellt, nachdem sie einem Weg außerhalb des Materials gefolgt sind;
man trennt die beiden Strahlungen zur Erzeugung eines ersten und eines zweiten monochromatischen Strahlenbündels;
man erzeugt ein zweites und ein drittes elektrisches Signal mit der Frequenz gleich der Differenz zwischen den beiden genannten Frequenzen, wobei das zweite und das dritte Signal die Schwebungen zwischen den Strahlungen des ersten monochromatische Strahlenbündels, nachdem es auf einem Weg außerhalb des Materials geleitet worden ist, und des zweiten monochromatischen Strahlenbündels, nachdem es auf zwei verschiedenen wegen im Material geleitet worden ist, darstellt;

man mißt die auf den Differenzen des optischen Wegs beruhenden Phasendifferenzen zwischen dem zweiten bzw. dritten Schwebungssignal und dem ersten Schwebungssignal;

und man ermittelt die Werte für die Dicke und den Brechungsindex des Materials aus den Phasendifferenzen.

2. Verfahren nach Anspruch 1, dadurch gekennzeichnet, daß man die beiden Lichtstrahlungen durch den Zeeman-Effekt erhält.

3. Verfahren nach Anspruch 1 oder 2, dadurch gekennzeichnet, daß man das getestete Material in aufeinanderfolgenden Schichten auf einem Träger aufbringt; daß man das zweite und das dritte Schwebungssignal dadurch erzeugt, daß man das erste monochromatische Strahlenbündel zuerst durch den Träger allein treten läßt und dann durch den Träger mit dem aufgebrachten Material nach der Aufbringung jeder Schicht treten läßt; daß man die Werte der Phasendifferenzen zwischen dem ersten und zweiten und zwischen dem ersten und dritten Schwebungssignal nach jeder Messung speichert; und daß man die Werte des Brechungsindex und der Dicke aus der Differenz zwischen aufeinanderfolgenden Messungen ermittelt.

4. Verfahren nach Anspruch 3, dadurch gekennzeichnet, daß die Schichten dotierte Siliciumschichten sind, die man für die Herstellung von Vorformen optischer Fasern an einem Trägerrohr aufgebracht hat.

5. Verfahren nach Anspruch 4, dadurch gekennzeichnet, daß man die Messungen der Dicke und des Brechungsindex entlang der gesamten Vorformachse und für jede axiale Stellung entlang dem gesamten Schichtumfang durchführt.

6. Verfahren nach einem der Ansprüche 1 bis 5, dadurch gekennzeichnet, daß man die beiden unterschiedlichen Wege für das zweite Strahlenbündel durch Aufspalten dieses Strahlenbündels mit Hilfe eines optischen Systems in zwei Teilbündel, die man mit unterschiedlichem Einfallswinkel auf das Material richtet, erhält.

7. Verfahren nach einem der Ansprüche 1 bis 5, dadurch gekennzeichnet, daß man die beiden unterschiedlichen Wege für das zweite Strahlenbündel aufeinanderfolgend unter Drehung des Trägers erhält und daß man wenigstens eines der jeweilig resultierenden elektrischen Signale für die Auswertung speichert.

8. Verfahren nach einem der vorhergehenden Ansprüche, dadurch gekennzeichnet, daß man zum Messen von Dickenwerten, die Phasenunterschiede über 2π im Vergleich zum ersten Schwebungssignal zur Folge haben, dadurch einen Bezugswert bestimmt, daß man das zweite Strahlenbündel das Material mit einem ersten Einfallswinkel durchsetzen läßt, und man das zweite und das dritte Schwebungssignal dadurch erzeugt, daß man das zweite Strahlenbündel das Material mit zwei verschiedenen Einfallswinkeln so durchsetzen läßt, daß die Phasendifferenz, die sie im Vergleich zum Bezugswert ergeben, niedriger ist als 2π.

9. Vorrichtung zur Durchführung des Verfahrens nach einem der Ansprüche 1 bis 8, enthaltend:

—eine Quelle (3) eines Lichtbündels (4), das zwei Strahlungen von geringfügig unterschiedlicher Frequenz (F1, F2) enthält;

—eine erste Fotodiode (6), die ein erstes elektrisches Signal einer Frequenz erzeugt, die gleich der Differenz zwischen den Frequenzen der beiden Strahlungen ist;

—einen Strahlspalter (5) zur Abtrennung eines Bruchteils des von der Quelle emittierten Lichtbündels (4) und zum Senden dieses Bruchteils zur ersten Fotodiode (6) entlang einem Weg (4a), der das Material (1, 2a; 101) nicht durchsetzt;

—Einrichtungen (8, 9), die den restlichen Lichtbündel-Bruchteil in die beiden monochromatischen Strahlungen teilen;

—Einrichtungen (14, 15), die ein zweites und ein drittes elektrisches Signal jeweils mit einer Frequenz gleich der Differenz der Frequenzen der beiden Strahlungen erzeugen;

—ein optisches System (10, 11, 12, 13, 16, 17), das den das zweite und das dritte elektrische Signal erzeugenden Einrichtungen eine der beiden Strahlungen entlang einem Weg (4c), der das Material nicht durchsetzt, und die andere entlang zwei unterschiedlichen Wegen (4d', 4d''; 4e, 4f) durch das Material zuführt;

—ein Phasenvergleichsystem (20, 21), das die elektrischen Signale empfängt und Signale erzeugt, welche die Phasendifferenzen zwischen dem ersten und dem zweiten bzw. zwischen dem ersten und dem dritten Signal angeben;

—ein Rechensystem (24), das aus den Wertepaaren der Phasendifferenz die Werte Dicke und des Brechungsindex ermittelt.

10. Vorrichtung nach Anspruch 9, dadurch gekennzeichnet, daß die Quelle ein Zeeman-Effekt-Laser ist.

11. Vorrichtung nach Anspruch 9 oder 10, dadurch gekennzeichnet, daß das optische System Einrichtungen (16, 17) zum Teilen der zweiten Strahlung in zwei getrennte Bündel umfaßt, welche den unterschiedlichen Wegen durch das Material folgen, und daß die Einrichtungen zum Erzeugen des zweiten und des dritten elektrischen Signals eine zweite und eine dritte Fotodiode (14, 15) umfassen, die jeweils die auf einem der unterschiedlichen Wege gelaufene zweite Strahlung empfangen und einem jeweiligen Phasenkomparator (20, 21) zugeordnet sind.

12. Vorrichtung nach Anspruch 9 oder 10, dadurch gekennzeichnet, daß das Material (101) an einem Träger montiert ist, der zur Aufnahme der zweiten Strahlung mit zwei unterschiedlichen Einfallswinkeln drehbar ist, und daß die Einrichtungen zum Erzeugen des zweiten und des dritten elektrischen Signals eine einzige Fotodiode (15) umfassen, die die zweite Strahlung entlang den beiden unterschiedlichen Wegen zu zwei verschiedenen Zeitpunkten empfängt.

13. Vorrichtung nach einem der Ansprüche 9 bis 12, gekennzeichnet durch eine Einrichtung zum Erzeugen einer Relativbewegung zwischen dem Material (1, 2a; 101) und der zweiten Strahlung zur Bewirkung von Messungen an verschiedenen Punkten der Oberfläche des Materials.

**Revendications**

1. Procédé pour mesurer l'épaisseur et l'indice de réfraction de matériaux transparents, comprenant les opérations de: engendrer deux radiations lumineuses ayant des fréquences peu différentes; engendrer un premier signal électrique ayant la fréquence égale à la différence des fréquences des deux radiations, ce signal représentant le battement des radiations qui on suivi un chemin ne passant pas par le matériau; séparer les deux radiations de façon à engendrer un premier et un second faisceau monochromatique; engendrer un deuxième et un troisième signal électrique ayant la fréquence égale à la différence desdites deux fréquences, ces deuxième et troisième signaux électriques représentant le battement des radiations du premier faisceau monochromatique, qui ont suivi un chemin ne passant pas par le matériau, et du second faisceau monochromatique, qui ont suivi deux chemins différents passant par le matériau; mesurer les différences de phase, dues aux différences du chemin optique, entre le deuxième et troisième signal de battement, respectivement, et le premier signal de battement; et obtenir les valeurs de l'épaisseur et de l'indice de réfraction du matériau à partir de ces différences de phase.

2. Procédé selon la revendication 1, caractérisé en ce que les deux radiations lumineuses sont obtenues par effet Zeeman.

3. Procédé selon l'une quelconque des revendications 1 ou 2, caractérisé en ce que le matériau testé est déposé en couches successives sur un support, et en ce qu'on obtient le deuxième et troisième battement en faisant passer le deuxième faisceau monochromatique d'abord à travers le support seul, et en suite à travers le support avec le matériau déposé, après le dépôt de chaque couche, on mémorise après chaque mesure les valeurs de la différence de phase entre le deuxième et troisième battement et le premier, et on obtient les valeurs de l'indice de réfraction et de l'épaisseur à partir de la différence entre deux mesures successives.

4. Procédé selon la revendication 3, caractérisé en ce que ces couches sont des couches de silice dopée déposées sur un tuyau de support pour la production de préformes de fibres optiques.

5. Procédé selon la revendication 4, caractérisé en ce que les mesures d'épaisseur et d'indice de réfraction sont effectuées le long de l'axe entier de la préforme et, pour chaque position axiale, le long de la circonférence entière de la couche.

6. Procédé selon l'une quelconque des revendications 1 à 5, caractérisé en ce que les deux chemins différents pour le deuxième faisceau sont obtenus en partageant ce faisceau, au moyen d'un système optique, en deux faisceaux partiels, que l'on fait arriver sur le matériau avec des angles d'incidence différents.

7. Procédé selon l'une quelconque des revendications 1 à 5, caractérisé en ce que les deux chemins différents pour le deuxième faisceau sont obtenus successivement par la rotation du support, et au moins un des signaux électriques respectifs resultants est mémorisé pour la mesure.

8. Procédé selon l'une quelconque des revendications 1 à 7, caractérisé en ce que pour mesurer des épaisseurs donnant lieu à des différences de phase supérieures à $2\pi$ par rapport au premier battement, on détermine une valeur de référence en faisant traverser le matériau par le deuxième faisceau avec un premier angle d'incidence, et on engendre le deuxième et troisième battement en faisant traverser le matériau par le deuxième faisceau avec deux angles différents, tels que la différence de phase qu'ils introduisent par rapport à la valeur de référence soit inférieure à $2\pi$.

9. Appareil pour la mise en oeuvre du procédé selon l'une quelconque des revendications 1 à 8, comprenant:

—une source (3) d'un faisceau de lumière (4) comprenant deux radiations avec des fréquences peu différentes (F1, F2);

—une première photodiode (6) qui engendre un premier signal électrique dont la fréquence est égale à la différence des fréquences des deux radiations;

—un dispositif (5) de division du faisceau, pour prélever une fraction du faisceau (4) émis par la source et l'envoyer à la première photodiode (6) le long d'un chemin (4a) qui ne passe pas par le matériau (1, 2a; 101);

—des moyens (8, 9) pour partager la fraction résiduelle du faisceau en les deux radiations monochromatiques;

—des moyens (14, 15) pour engendrer un deuxième et un troisième signal électrique, les deux ayant une fréquence égale à la différence des fréquences des deux radiations;

—un système optique (10, 11, 12, 13, 16, 17) pour envoyer aux moyens engendrant le deuxième et troisième signal électrique l'une des deux radiations le long d'un chemin (4c) qui ne passe pas par le matériau, et l'autre le long de deux chemins différents (4d', 4d''; 4e, 4f) passant par le matériau;

—un système de comparaison de phase (20, 21) qui reçoit ces signaux électriques et engendre des signaux représentant la différence de phase entre le deuxième ou troisième signal, respectivement, et le premier;

—un sysème de calcul (24) pour obtenir les valeurs de l'épaisseur et de l'indice de réfraction à partir de paires de valeurs de la différence de phase.

10. Appareil selon la revendication 9, caractérisé en ce que ladite source est un laser à effet Zeeman.

11. Appareil selon l'une quelconque des revendications 9 ou 10, caractérisé en ce que le système optique comprend des moyens (16, 17) pour partager la seconde radiation en deux faisceaux différents qui suivent lesdits chemins différents à travers le matériau, et en ce que les moyens pour engendrer le deuxième et troisième signaux électriques comprennent une deuxième et une troisième photodiode (14, 15) dont chacune reçoit la seconde radiation selon l'un des deux chemins différents et est associée à un comparateur de phase respectif (20, 21).

12. Appareil selon l'une quelconque des revendications 9 ou 10, caractérisé en ce que le matériau (101) est monté sur un support qui peut tourner pour recevoir la seconde radiation selon deux angles d'incidence différents, et en ce que les moyens pour engendrer le deuxième et troisième signal électrique comprennent une photodiode unique (15) qui reçoit la seconde radiation le long des deux chemins différents en deux instants différents.

13. Appareil selon l'une quelconque des revendications 9 à 12, caractérisé en ce qu'il comporte des moyens pour engendrer un mouvement relatif entre le matériau (1, 2a; 101) et la seconde radiation de façon à effectuer des mesures dans des points différents de la surface du matériau.

Fig.1

Fig.2